(19) Europäisches Patentamt
European Patent Office
Office européen des brevets

(11) EP 0 679 661 B1

(12) **EUROPEAN PATENT SPECIFICATION**

(45) Date of publication and mention of the grant of the patent:
**06.05.1998 Bulletin 1998/19**

(51) Int Cl.$^{6}$: **C08F 4/607**, C08F 10/00

(21) Application number: **95109918.3**

(22) Date of filing: **14.08.1992**

(54) **Prepolymerized olefin polymerization catalyst and polymerization process**

Prepolymerizierter Olefinpolymerisationskatalysator und Polymerisationsverfahren

Catalyseur prépolymérisé pour la polymérisation d'oléfines et procédé de polymérisation

(84) Designated Contracting States:
**DE FR GB IT NL**

(30) Priority: **14.08.1991 JP 204464/91**
**14.08.1991 JP 204465/91**
**14.08.1991 JP 204466/91**
**14.08.1991 JP 204467/91**

(43) Date of publication of application:
**02.11.1995 Bulletin 1995/44**

(62) Document number(s) of the earlier application(s) in accordance with Art. 76 EPC:
**92113887.1 / 0 534 119**

(73) Proprietor: **Mitsui Chemicals, Inc.**
**Tokyo (JP)**

(72) Inventors:
- **Shinozaki, Tetsunori,**
**c/o Mitsui Petrochem.Ind.Ltd**
**Kuga-gun, Yamaguchi 740 (JP)**
- **Kioka, Mamoru,**
**c/o Mitsui Petrochemical Ind., Ltd.**
**Kuga-gun, Yamaguchi 740 (JP)**

(74) Representative:
**Hansen, Bernd, Dr. Dipl.-Chem. et al**
**Hoffmann Eitle,**
**Patent- und Rechtsanwälte,**
**Arabellastrasse 4**
**81925 München (DE)**

(56) References cited:
**EP-A- 0 354 893**

Remarks:
The file contains technical information submitted after the application was filed and not included in this specification

EP 0 679 661 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

### FIELD OF THE INVENTION

The present invention relates to a prepolymerized catalyst capable of preparing an olefin polymer having a high melt tension, a catalyst for olefin polymerization and a polymerization process of olefin.

### BACKGROUND OF THE INVENTION

Olefin polymers such as polypropylene, high-density polyethylene, and linear low-density polyethylene (LLDPE) are excellent in not only transparency but also mechanical strength such as rigidity and impact strength, and have been conventionally molded into films by means of inflation molding, injection molding, extrusion molding, etc.

Such olefin polymers as mentioned above generally are low in the melt tension (MT), so that they are difficultly molded into large capacity containers (e.g., bottles) for example by a blow molding or difficultly molded into liners of electrical appliances for example by a vacuum molding. By those restrictions in the molding processes, the resulting molded products are also restricted. That is, the use applications of the olefin polymers are restricted in spite that they have various excellent properties.

Further, as for polypropylene, there are such problems that a phenomenon of drawdown occurs and molding conditions are restricted when propylene is molded into a film by an inflation molding, because of its low melt tension. For coping with those problems, a method of adding a highpressure low-density polyethylene to polypropylene is carried out in the conventional inflation molding process to increase the melt tension thereby to stabilize bubbles. However, this method sometimes induces decrease of the film strength and decrease of a film transparency.

Accordingly, if olefin polymers (e.g., polypropylene) having a high melt tension are developed, it becomes possible to form large capacity containers such as bottles by a blow molding and to form liners of electrical appliances by a vacuum molding from those polymers, and hence the use applications of the olefin polymers can be much more extended.

Further, when the olefin polymers having a high melt tension are molded into films by means of an inflation molding, the bubbles can be stabilized and the molding speed can be made higher.

EP-A-0 354 893 describes a process for producing large symmetrical polyolefin particles using a prepolymerized precipitated complex of an organoaluminum compound and a cyclopentadienyl metallocene.

For these reasons, an advent of olefin polymers such as polypropylene, high-density polyethylene and linear low-density polyethylene having high melt tension has been eagerly desired.

The present inventors have studied on the olefin polymers of high melt tension to comply with the above-mentioned requirements, and as a result, they have found that an olefin polymer of high melt tension can be obtained by polymerizing olefin in the presence of a catalyst for olefin polymerization comprising a prepolymerized catalyst which is obtained by copolymerizing an α-olefin and a polyene compound to a catalyst which comprises a transition metal compound catalyst component and an organometallic compound catalyst component, and accomplished the present invention.

### OBJECT OF THE INVENTION

The object of the present invention is to provide a prepolymerized catalyst capable of preparing an olefin polymer having a high melt tension, a catalyst for olefin polymerization comprising the prepolymerized catalyst and a polymerization process of olefin.

### SUMMARY OF THE INVENTION

The present invention provides a prepolymerized catalyst [I] obtainable by prepolymerizing an α-olefin and a polyene compound having 7 or more carbon atoms which has an olefinic double bond at both terminals to

[A-3] a transition metal metallocene compound catalyst component containing a ligand having a cyclopentadienyl skeleton, and
[B-2] an organoaluminum oxy-compound catalyst component,

in the total amounts of the α-olefin and the polyene compound of 0.01 to 2,000 g per 1 g of the metallocene compound [A-3], and
constituent units derived from the α-olefin being in an amount of 99.999 to 70 % by mol, and constituent units derived from the polyene compound being in an amount of 0.001 to 30 % by mol.

There is also provided by the present invention a catalyst for olefin polymerization comprising:

[I] the prepolymerized catalyst as defined above; and
[II] an organoaluminum oxy-compound catalyst component.

This catalyst for olefin polymerization contains an electron donor [III] in the case of necessity, in addition to the prepolymerized catalyst [I] and the organometallic compound catalyst component [II].

The polymerization process of olefin according to the invention comprises polymerizing or copolymerizing olefin in the presence of the above-mentioned catalyst [I] for olefin polymerization.

The olefin polymer obtainable in the invention is an α-olefin/polyene copolymer-containing olefin polymer which comprises (i) an α-olefin/polyene copolymer and (ii) an olefin polymer. Such olefin polymer is prepared by polymerizing or copolymerizing olefin to the above-mentioned prepolymerized catalyst [I].

The olefin polymer obtainable in the invention has a high melt tension.

## BRIEF DESCRIPTION OF THE DRAWING

Fig. 1 is a view illustrating steps of a process for preparing an olefin polymer using a prepolymerized catalyst [I] of the present invention.

## DETAILED DESCRIPTION OF THE INVENTION

The prepolymerized catalyst, the catalyst for olefin polymerization and the polymerization process of olefin according to the present invention are described in detail hereinafter.

The term "polymerization" used in the invention sometimes means not only "homopolymerization" but also "copolymerization", and the term "polymer" used in the invention sometimes means not only "homopolymer" but also "copolymer".

In Fig. 1, the steps of a process for preparing an olefin polymer using the prepolymerized catalyst [I] of the invention are illustrated.

At first, the transition metal compound catalyst component [A] used for forming the prepolymerized catalyst [I] of the invention is described.

The transition metal compound catalyst component [A] used in the invention is a compound containing a transition metal selected from metals in Group III to Group VIII of a periodic table, and preferably is a compound containing at least one transition metal selected from Ti, Zr, Hf, Nb, Ta, Cr and V.

In the prepolymerization of an α-olefin and a polyene compound to a catalyst comprising the transition metal compound catalyst component [A-3] and the organometallic compound catalyst component [B-2], an electron donor (a) may be employed, if necessary.

Examples of the electron donors (a) include:

oxygen-containing electron donors such as alcohols, phenols, ketones, aldehydes, carboxylic acids, organic acid halides, esters of organic or inorganic acids, ethers, diethers, acid amides, acid anhydrides and alkoxysilane; and nitrogen-containing electron donors such as ammonias, amines, nitriles, pyridines and isocyanates.

In more concrete, there can be mentioned for example:

alcohols of 1 - 18 carbon atoms such as methanol, ethanol, propanol, butanol, pentanol, heptanol, 2-ethylhexanol, octanol, dodecanol, octadecyl alcohol, oleyl alcohol, benzyl alcohol, phenylethyl alcohol, cumyl alcohol, isopropyl alcohol and isopropylbenzyl alcohol;
halogen-containing alcohol of 1 - 18 carbon atoms such as trichloromethanol, trichloroethanol and trichlorohxanol;
phenols of 6 - 20 carbon atoms which may have a lower alkyl group such as phenyl, cresol, xylenol, ethyl phenol, propyl phenol, nonyl phenol, cumyl phenol and naphthol;
ketones of 3 - 15 carbon atoms such as acetone, methyl ethyl ketone, methyl isobutyl ketone, acetophenone, benzophenone and benzoquinone;
aldehydes of 2 - 15 carbon atoms such as acetaldehyde, propionaldehyde, octylaldehyde, benzaldehyde, tolualdehyde and naphthaldedehyde;
organic acid esters of 2 - 18 carbon atoms such as methyl formate, methyl acetate, ethyl acetate, vinyl acetate, propyl acetate, octyl acetate, cyclohexyl acetate, ethyl propionate, methyl butyrate, ethyl valerate, methyl chloroacetate, ethyl dichloroacetate, methyl methacrylate, ethyl crotonate, ethyl cyclohexanecarboxylate, methyl benzoate, ethyl benzoate, propyl benzoate, butyl benzoate, octyl benzoate, cyclohexyl benzoate, phenyl benzoate,

benzyl benzoate, methyl toluate, ethyl toluate, amyl toluate, ethyl ethylbenzoate, methyl anisate, ethyl anisate, ethyl ethoxybenzoate, γ-butyrolactone, δ-valerolactone, cumarine, phthalide and ethyl carbonate;
acid halides of 2 - 15 carbon atoms such as acetyl chloride, benzoyl chloride, toluic acid chloride and anisic acid chloride;
ethers of 2 - 20 carbon atoms such as methyl ether, ethyl ether, isopropyl ether, butyl ether, amyl ether, tetrahydrofuran, anisole and diphenyl ether;
acid amides such as N,N-dimethylacetamide, N,N-dimethylbenzamide and N,N-dimethyltoluamide;
amines such as trimethylamine, triethylamine, tributylamine, tribenzylamine and tetramethylethylenediamine;
nitriles such as acetonitrile, benzonitrile and trinitrile;
pyridines such as pyridine, methyl pyridine, ethyl pyridine and dimethyl pyridine; and
acid anhydrides such as acetic anhydride, phthalic anhydride and benzoic anhydride.

Preferred examples of the organic acid esters are polycarboxylates having skeleton of the following formula.

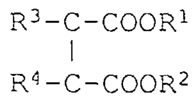

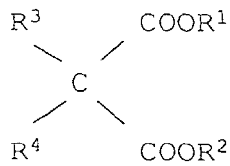

or

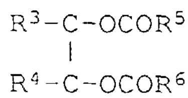

In the above formulas, $R^1$ is a substituted or unsubstituted hydrocarbon group; each of $R^2$, $R^5$ and $R^6$ is hydrogen or a substituted or unsubstituted hydrocarbon group; and each of $R^3$ and $R^4$ is hydrogen or a substituted or unsubstituted hydrocarbon group, preferably at least one of them being a substituted or unsubstituted hydrocarbon group. $R^3$ and $R^4$ may be bonded to each other to form a cyclic structure. When the hydrocarbon groups $R^1$ to $R^6$ are substituted, the substituted groups contain different atoms such as N, O and S, and have groups such as C-O-C, COOR, COOH, OH, $SO_3H$, -C-N-C- and $NH_2$.

Concrete examples of the polycarboxylates include:

aliphatic polycarboxylates,
alicyclic polycarboxylates,
aromatic polycarboxylates, and
heterocyclic polycarboxylates.

Preferred examples of the polycarboxylates are n-butyl maleate, diisobutyl methylmaleate, di-n-hexyl cyclohexenecarboxylate, diethyl nadiate, diisopropyl tetrahydrophthalate, diethyl phthalate, diisobutyl phthalate, di-n-butyl phthalate, di-2-ethylhexyl phthalate and dibutyl 3,4-furandicarboxylate.

Particularly preferred examples of the polycarboxylates are phthalates.

As the diether compounds, there can be mentioned compounds represented by the following formula:

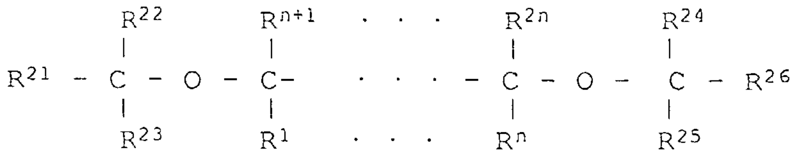

wherein n is an integer satisfying the condition of $2 \leq n \leq 10$; $R^1$ to $R^{26}$ are substituent groups having at least one element selected from carbon, hydrogen, oxygen, halogen, nitrogen, sulfur, phosphorus, boron and silicon; any optional combination of from $R^1$ to $R^{26}$, preferably $R^1$ to $R^{2n}$, may form in corporation a ring other than a benzene ring; and an atom other than a carbon atom may be contained in the main chain.

Preferred examples thereof are:

2,2-diisobutyl-1,3-dimethoxypropane,
2-isopropyl-2-isopentyl-1,3-dimethoxypropane,
2,2-dicyclohexyl-1,3-dimethoxypropane, and
2,2-bis(cyclohexylmethyl)-1,3-dimethoxypropane.

The above-mentioned electron donors may be used in combination of two or more kinds.

A metallocene compound [A-3] is employed as the transition metal compound catalyst component.

Processes for preparing the metallocene compound [A-3] are described in detail, for example, in Japanese Patent Laid-open Publications No. 63(1988)-61010, No. 63(1988)-152608, No. 63(1988)-264606, No. 63(1988)-280703, No. 64(1989)-6003, No. 1(1989)-95110, No. 3(1991)-62806, No. 1(1989)-259004, No. 64(1989)-45406, No. 60(1985)-106808, No. 60(1985)-137911, No. 58(1983)-19309, No. 60(1985)-35006, No. 60(1985)-35007, No. 61(1986)-296008, No. 63(1988)-501369, No. 61(1986)-221207, No. 62(1987)-121707, No. 61(1986)-66206, No. 2(1990)-22307, No. 2 (1990)-173110, No. 2(1990)-302410, No. 1(1989)-129003, No. 1(1989)-210404, No. 3(1991)-66710, No. 3(1991)-70710, No. 1(1989)-207248, No. 63(1988)-222177, No. 63(1988)-222178, No. 63(1988)-222179, No. 1(1989)-12407, No. 1(1989)-301704, No. 1(1989)-319489, No. 3(1991)-74412, No. 61(1986)-264010, No. 1(1989)-275609, No. 63 (1988)-251405, No. 64(1989)-74202, No. 2(1990)-41303, No. 2(1990)-131488, No. 3(1991)-56508, No. 3(1991)-70708 and No. 3(1991)-70709.

The metallocene compound [A-3] is a compound concretely represented by the formula

$$ML_x$$

wherein M is a transition metal selected from the group consisting of Zr, Ti, Hf, V, Nb, Ta and Cr, L is a ligand coordinating to the transition metal, at least one of L is a ligand having a cyclopentadienyl skeleton, L other than the ligand having a cyclopentadienyl skeleton is a hydrocarbon group of 1-12 carbon atoms, an alkoxy group, an aryloxy group, trialkylsilyl group, $SO_3R$ (wherein R is a hydrocarbon group of 1 to 8 carbon atoms which may have a substituent such as halogen), halogen atom or hydrogen atom, and x is a valence of the transition metal.

The ligands having a cyclopentadienyl skeleton include, for example, cyclopentadienyl, alkyl-substituted cyclopentadienyl groups such as methylcyclopentadienyl, dimethylcyclopentadienyl, trimethylcyclopentadienyl, tetramethylcyclopentadienyl, pentamethylcyclopentadienyl, ethylcyclopentadienyl, methylethylcyclopentadienyl, propylcyclopentadienyl, methylpropylcyclopentadienyl, butylcyclopentadienyl, methylbutylcyclopentadienyl, and hexylcyclopentadienyl, and an indenyl group, 4,5,6,7-tetrahydroindenyl group and a fluorenyl group. These groups may be substituted by a halogen atom or trialkylsilyl group.

Of these ligands coordinating to the transition metal, the alkyl-substituted cyclopentadienyl groups are most preferred.

When the compound represented by the above formula contains two or more ligands having a cyclopentadienyl skeleton, two ligands having a cyclopentadienyl skeleton may be bonded together via an alkylene group such as ethylene and propylene, a substituted alkylene group such as isopropylidene and diphenylmethylene, a silylene group or a substituted silylene group such as dimethylsilylene, diphenylsilylene and methylphenylsilylene.

Following ligands may be exemplified as the ligand other than those having a cyclopentadienyl skeleton.

The hydrocarbon group having 1-12 carbon atoms includes, for example, alkyl, cycloalkyl, aryl and aralkyl;
the alkyl group includes methyl, ethyl, propyl, isopropyl and butyl;
the cycloalkyl group includes, for example, cyclopentyl and cyclohexyl;
the aryl group includes, for example, phenyl and tolyl; and

the aralkyl group includes, for example, benzyl and neophyl.

The alkoxy group includes, for example, methoxy, ethoxy and butoxy;

the aryloxy group includes, for example, phenoxy; and
the hologen includes, for example, fluorine, chlorine, bromine and iodine.

The ligand represented by $SO_3R$ includes, for example, p-toluenesulfonate, methanesulfonate and trifluoromethanesulfonate.

When the transition metal has a valence of 4, the metallocene compound [A-3] containing ligands having a cyclopentadienyl skeleton may be represented more concretely by the formula

$$R^2{}_kR^3{}_lR^4{}_mR^5{}_nM$$

wherein M is an above mentioned transition metal, $R^2$ is a group (ligand) having a cyclopentadienyl skeleton, $R^3$, $R^4$ and $R^5$ are each a group having a cyclopentadienyl skeleton, an alkyl group, cycloalkyl group, aryl group, aralkyl group, alkoxy group, aryloxy group, trialkylsilyl group, $SO_3R$ group, halogen atom or hydrogen atom, k is an integer of at least 1, and k+l+m+n = 4.

In the transition metal compounds of the above-mentioned formula $R^2{}_kR^3{}_lR^4{}_mR^5{}_nM$, at least two of $R^2$, $R^3$, $R^4$ and $R^5$ preferablly have a cyclopentadienyl skeleton, that is, $R^2$ and $R^3$ are each a group having a cyclopentadienyl skeleton. These groups having a cyclopentadienyl skeleton may be bonded to each other via an alkylene group such as ethylene and propylene, a substituted alkylene group such as isopropylidene, diphenylmethylene, a silylene group or a substituted silylene group such as dimethylsilylene, diphenylsilylene and methylphenylsilylene. Also, $R^4$ and $R^5$ may be each a group having a cyclopentadienyl skeleton, an alkyl group, cycloalkyl group, aryl group, aralkyl group, alkoxy group, aryloxy group, trialkylsilyl group, $SO_3R$, halogen atom or hydrogen atom.

Listed below are typical representatives of the transition metal compounds in which M is zirconium.

Bis(indenyl)zirconium dichloride,
Bis(indenyl)zirconium dibromide,
Bis(indenyl)zirconium bis(p-toluenesulfonate),
Bis(4,5,6,7-tetrahydroindenyl)zirconium dichloride,
Bis(fluorenyl)zirconium dichloride,
Ethylenebis(indenyl)zirconium dichloride,
Ethylenebis(indenyl)zirconium dibromide,
Ethylenebis(indenyl)dimethyl zirconium,
Ethylenebis(indenyl)diphenyl zirconium,
Ethylenebis(indenyl)methyl zirconium monochloride,
Ethylenebis(indenyl)zirconium bis(methanesulfonate),
Ethylenebis(indenyl)zirconium bis(p-toluenesulfonate),
Ethylenebis(indenyl)zirconium bis(trifluoromethanesulfonate),
Ethylenebis(4,5,6,7-tetrahydroindenyl)zirconium dichloride,
Isopropylidene(cyclopentadienyl-fluorenyl)zirconium dichloride,
Isopropylidene(cyclopentadienylmethylcyclopentadienyl) zirconium dichloride,
Dimethylsilylenebis(cyclopentadienyl)zirconium dichloride,
Dimethylsilylenebis(methylcyclopentadienyl)zirconium dichloride,
Dimethylsilylenebis(dimethylcyclopentadienyl)zirconium dichloride,
Dimethylsilylenebis(trimethylcyclopentadienyl)zirconium dichloride,
Dimethylsilylenebis(indenyl)zirconium dichloride,
Dimethylsilylenebis(indenyl)zirconium bis(trifluoromethanesulfonate),
Dimethylsilylenebis(4,5,6,7-tetrahydroindenyl)zirconium dichloride,
Dimethylsilylene(cyclopentadienyl-fluorenyl)zirconium dichloride,
Diphenylsilylenebis(indenyl)zirconium dichloride,
Methylphenylsilylenebis(indenyl)zirconium dichloride,
Bis(cyclopentadienyl)zirconium dichloride,
Bis(cyclopentadienyl)zirconium dibromide,
Bis(cyclopentadienyl)methyl zirconium monochloride,
Bis(cyclopentadienyl)ethyl zirconium monochloride,

Bis(cyclopentadienyl)cyclohexyl zirconium monochloride,
Bis(cyclopentadienyl)phenyl zirconium monochloride,
Bis(cyclopentadienyl)benzyl zirconium monochloride,
Bis(cyclopentadienyl)zirconium monochloride monohydride,
Bis(cyclopentadienyl)methyl zirconium monohydride,
Bis(cyclopentadienyl)dimethyl zirconium,
Bis(cyclopentadienyl)diphenyl zirconium,
Bis(cyclopentadienyl)dibenzyl zirconium,
Bis(cyclopentadienyl)zirconium methoxy chloride,
Bis(cyclopentadienyl)zirconium ethoxy chloride,
Bis(cyclopentadienyl)zirconium bis(methanesulfonate),
Bis(cyclopentadienyl)zirconium bis(p-toluenesulfonate),
Bis(cyclopentadienyl)zirconium bis(trifluoromethanesulfonate),
Bis(methylcyclopentadienyl)zirconium dichloride,
Bis(dimethylcyclopentadienyl)zirconium dichloride,
Bis(dimethylcyclopentadienyl)zirconium ethoxy chloride,
Bis(dimethylcyclopentadienyl)zirconium bis(trifluoromethanesulfonate),
Bis(ethylcyclopentadienyl)zirconium dichloride,
Bis(methylethylcyclopentadienyl)zirconium dichloride,
Bis(propylcyclopentadienyl)zirconium dichloride,
Bis(methylpropylcyclopentadienyl)zirconium dichloride,
Bis(butylcyclopentadienyl)zirconium dichloride,
Bis(methylbutylcyclopentadienyl)zirconium dichloride,
Bis(methylbutylcyclopentadienyl)zirconium bis(methanesulfonate),
Bis(trimethylcyclopentadienyl)zirconium dichloride,
Bis(tetramethylcyclopentadienyl)zirconium dichloride,
Bis(pentamethylcyclopentadienyl)zirconium dichloride,
Bis(hexylcyclopentadienyl)zirconium dichloride,
Bis(trimethylsilylcyclopentadienyl)zirconium dichloride

In the above-mentioned metallocene compound, the disubstituted cyclopentadienyl groups include 1,2- and 1,3-substituted groups, and the tri-substituted cyclopentadienyl groups include 1,2,3- and 1,2,4- substituted groups. Also the alkyl groups such as propyl and butyl include n-, i-, sec- and tert- isomers.

There may also be used transition metal compounds wherein the zirconium metal in the above-exemplified zirconium compounds is replaced with titanium, hafnium, vanadium, niobium, tantalum or chromium.

These compounds may be used alone or in combination of two or more.

Further, those compounds may be used after diluted in hydrocarbon or halogenated hydrocarbon.

In the invention, a zirconocene compound having zirconium as its central metal atom and having a ligand containing at least two cyclopentadienyl skeletons is preferably used as the metallocene compound [A-3].

Such metallocene compound as mentioned above can be supported on a carrier by bringing it into contact with a particulate carrier compound.

Examples of the carrier compounds employable in the invention include organic carrier compounds such as $SiO_2$, $Al_2O_3$, $B_2O_3$, MgO, $ZrO_2$, CaO, $TiO_2$, ZnO, $SnO_2$, BaO and ThO; and resins such as polyethylene, polypropylene, poly-1-butene, poly-4-methyl-1-pentene and a styrene/divinylbenzene copolymer.

These carrier compounds may be used in combination of two or more kinds.

Among the above-mentioned compounds, preferably used are $SiO_2$, $Al_2O_3$ and MgO.

Next, the organometallic compound catalyst component [B] containing a metal selected from metals in Group I to Group III of a periodic table employable for forming the prepolymerized catalyst [I] of the invention will be described.

Concrete examples of the organoaluminum oxy-compound [B-2] are aluminoxanes represented by the following formula (1) or (2).

$$R_2Al-(O\underset{\underset{R}{|}}{Al})_m-OAlR_2 \qquad (1)$$

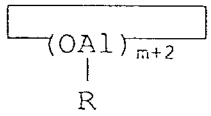

(2)

In the formulas (1) and (2), R is a hydrocarbon group such as a methyl group, an ethyl group, a propyl group or a butyl group, preferably a methyl group, an ethyl group, more preferably a methyl group; and m is an integer of 2 or more, preferably an integer of from 5 to 40.

The aluminoxane used herein may be formed from mixed alkyloxyaluminum units composed of an alkyloxyaluminum unit represented by the formula ($OAl(R^1)$) and an alkyloxyaluminum unit represented by the formula ($OAL(R^2)$), wherein each of $R^1$ and $R^2$ is exemplified by the similar hydrocarbons to those for the above R, and $R^1$ and $R^2$ are groups different from each other. In this case, preferred is aluminoxane formed from the mixed alkyloxyalumium units containing a methyloxyaluminum unit ($OAl(CH_3)$) generally in an amount of not less than 30 % by mol, preferably not less than 50 % by mol, particularly preferably not less than 70 % by mol.

The organoaluminum oxy- compound [B-2] used in the invention may be aluminoxane hitherto known or such benzene-insoluble organoaluminum oxy compounds having been discovered by the present applicants.

The aluminoxane may be prepared, for example, by the following methods.

(1) A method wherein suspensions of compounds containing adsorbed water or salts containing water of crystallization, for example, magnesiumchloride hydrate, copper sulfate hydrate, aluminum sulfate hydrate, nickel sulfate hydrate and cerium (I) chloride hydrate, in hydrocarbon solvents are allowed to react with an organoaluminum compound such as trialkylaluminum, and the desired aluminoxane is recovered as a hydrocarbon solution containing the same.

(2) A method wherein an organoaluminum compound such as trialkylaluminum is treated directly with water, ice or water vapor in such solvent as benzene, toluene, ethyl ether or tetrahydrofuran, and the desired aluminoxane is recovered as a hydrocarbon solution containing the same.

(3) A method wherein an organoaluminum compound such as trialkylaluminum is allowed to react with an organotin oxide in a solvent such as decane, benzene or toluene.

Of these, preffered is the method of (1). The aluminoxane as illustrated above may contain small amounts of organometallic components other than aluminum. From the above-mentioned solution containing aluminoxane as recovered, the solvent or unaltered organoaluminum compound is removed by distillation, and the remaining aluminoxane may dissolved again in a solvent.

The organoaluminum compound used in preparing the aluminoxane includes concretely trialkylaluminum such as trimethylaluminum, triethylaluminum, tripropylalminum, triisopropylaluminum, tri-n-butylaluminum, triisobutylaluminum, tri-sec-butylaluminum, tri-tert-butylaluminum, tripentylaluminum, trihexylaluminum, trioctylaluminum, tridecylaluminum,

tricycloalkylaluminum such as tricyclohexylaluminum or tricyclooctylaluminum;
dialkylaluminum halide such as dimethylaluminum chloride, diethylaluminum chloride, diethylaluminum bromide or diisobutylaluminum chloride;
dialkylaluminum hydride such as diethylaluminum hydride or diisobutylaluminum hydride;
dialkylaluminum alkoxide such as dimethylaluminum methoxide or diethylaluminum ethoxide; and
dialkylaluminum aryloxide such as diethylaluminum phenoxide.

Furthermore, the isoprenylaluminum represented by the general formula may also be used.

$$(i\text{-}C_4H_9)_xAl_y(C_5H_{10})_z$$

wherein x, y and z are each a positive number, and $z \geq 2x$.

Of these, trialkylaluminum is particularly preferred.

Solvents used in the solutions of aluminoxane include aromatic hydrocarbons such as benzene, toluene, xylene, cumene and cymene; aliphatic hydrocarbons such as pentane, hexane, heptane, octane, decane, dodecane, hexadecane and octadecane; alicyclic hydrocarbons such as cyclopentane, cyclohexane, cyclooctane and methylcyclopentane; petroleum fractions such as gasoline, kerosene and gas oil; or haloganated hydrocarbons such as halides, particularly chloride and bromides, of the above-mentioned aromatic, aliphatic and alicyclic hydrocarbons. In addition thereto, there may also be used ethers other than ethyl ether and tetrahydrofuran. Of these solvents as exemplified above, particularly preferred are aromatic hydrocarbons.

When the transition metal compound catalyst component is the metallocene compound [A-3], the organometallic compound catalyst component is an organoaluminum oxy-compound [B-2].

In the prepolymerization of an α-olefin and a polyene compound to a catalyst comprising the transition metal compound catalyst component [A-3] and the organometallic compound catalyst component [B-2], the aforementioned electron donor (a) or an electron donor (b) described below may be employed, if necessary.

Useful electron donor (b) is an organosilicon compound represented by the following formula:

$$R_nSi(OR')_{4-n}$$

wherein each of R and R' is a hydrocarbon group, and n is a number satisfying the condition of $0 < n < 4$.

Concrete examples of the organosilicon compounds represented by the above formula include:

trimethylmethoxysilane, trimethylethoxysilane, dimethyldimethoxysilane, dimethyldiethoxysilane, diisopropyldimethoxysilane, t-butylmethyldimethoxysilane, t-butylmethyldiethoxysilane, t-amylmethyldiethoxysilane, diphenyldimethoxysilane, phenylmethyldimethoxysilane, diphenyldiethoxysilane, bis-o-tolyldimethoxysilane, bis-m-tolyldimethoxysilane, bis-p-tolyldimethoxysilane, bis-p-tolyldiethoxysilane, bisethylphenyldimethoxysilane, dicyclohexyldimethoxysilane, cyclohexylmethyldimethoxysilane, cyclohexylmethyldiethoxysilane, ethyltrimethoxysilane, ethyltriethoxysilane, vinyltrimethoxysilane, methyltrimethoxysilane, n-propyltriethoxysilane, decyltrimethoxysilane, decyltriethoxysilane, phenyltrimethoxysilane, γ-chloropropyltrimethoxysilane, methyltriethoxysilane, ethyltriethoxysilane, vinyltriethoxysilane, t-butyltriethoxysilne, n-butyltriethoxysilane, iso-butyltriethoxysilane, phenyltriethoxysilane, γ-aminopropyltriethoxysilane, chlorotriethoxysilane, ethyltrisipropoxysilane, vinyltributoxysilane, cyclohexyltrimethoxysilane, cyclohexyltriethoxysilane, 2-norbornanetrimethoxysilane, 2-norbornanetriethoxysilane, 2-norbornanemethyldimethoxysilane, ethyl silicate, butyl silicate, trimethylphenoxysilane, methyltriallyoxysilane, vinyltris(β-methoxyethoxysilane), vinyltriacetoxysilane, dimethyltetraethoxysilane,
cyclopentyltrimethoxysilane, 2-methylcyclopentyltrimethoxysilane, 2,3-dimethylcyclopentyltrimethoxysilane, cyclopentyltriethoxysilane,
dicyclopentyldimethoxysilane, bis(2-methylcyclopentyl)dimethoxysilane, bis(2,3-dimethylcyclopentyl)dimethoxysilane, dicyclopentyldiethoxysilane,
tricyclopentylmethoxysilane, tricyclopentylethoxysilane, dicyclopentylmethylmethoxysilane, dicyclopentylethylmethoxysilane, hexenyltrimethoxysilane, dicyclopentylmethylethoxysilane, cyclopentyldimethylmethoxysilane, cyclopentyldiethylmethoxysilane, and cyclopentyldimethylethoxysilane.

Of these, preferably used are ethyltriethoxysilane, n-propyltriethoxysilane, t-butyltriethoxysilane, vinyltriethoxysilane, phenyltriethoxysilane, vinyltributoxysilane, diphenyldimethoxysilane, phenylmethyldimethoxysilane, bis-p-tolyldimethoxysilane, p-tolylmethyldimethoxysilane, dicyclohexyldimethoxysilane, cyclohexylmethyldimethoxysilane, 2-norbornanetriethoxysilane, 2-norbornanemethyldimethoxysilane, phenyltriethoxysilane, dicyclopentyldimethoxysilane, hexenyltrimethoxysilane, cyclopentyltriethoxysilane, tricyclopentylmethoxysilane and cyclopentyldimethylmethoxysilane.

The above-mentioned organosilicon compounds may be used in combination of two or more kinds.

Further, also employable as the electron donor (b) in the invention are:

2, 6-substituted piperidines, 2,5-substituted piperidines;
substituted methylenediamines such as N,N,N'N'-tetramethylenediamine and N,N,N'N'-tetraethylmethylenediamines;
nitrogen-containing electron donors such as substituted methylenediamines (e.g., 1,3-dibenzylimidazolidine and 1,3-dibenzyl-2-phenylimidazolidine);
phosphorus-containing electron donors such as phosphites (e.g., triethyl phosphite, tri-n-propyl phosphite, triisopropyl phosphite, tri-n-butyl phosphite, triisobutyl phosphite, diethyl-n-butyl phosphite and diethylphenyl phosphite); and
oxygen-containing electron donors such as 2,6-substituted tetrahydropyrans and 2,5-substituted tetrahydropyrans.

The above-mentioned electron donors (b) may be used in combination of two or more kinds.

The prepolymerized catalyst [I] according to the invention can be obtained by copolymerizing an α-olefin and a polyene compound to a catalyst comprising the transition metal compound catalyst component [A] and the organometallic compound catalyst component [B].

The α-olefins employable in the invention are α-olefins of 2 - 20 carbon atoms. Concrete examples of such α-olefins include ethylene, propylene, 1-butene, 1-pentene, 1-hexene, 3-methyl-1-butene, 3-methyl-1-pentene, 3-ethyl-1-pentene, 4-methyl-1-pentene, 4,4-dimethyl-1-pentene, 4-4-methyl-1-pentene, 4,4-dimethyl-1-hexene, 4-ethyl-1-hexene, 3-ethyl-1-hexene, 1-octene, 1-decene, 1-dodecene, 1-tetradecene, 1-hexadecene, 1-octadecene and 1-eicosene.

They can be used singly or in combination.

The α-olefin used in the prepolymerization may be the same as or different from an α-olefin which is used in the polymerization described later.

Among the above-exemplified α-olefins, preferably used are ethylene, propylene, 1-butene, 4-methyl-1-pentene, 3-methyl-1-butene and 1-eicosene.

Concrete examples of the polyene compounds include:

aliphatic polyene compounds such as 1,6-heptdiene, 1,7-octadiene, 1,8-nonadiene, 1,9-decadiene, 1,13-tetradecadiene, 1,5,9-decatriene;

alicyclic polyene compounds such as 1,4-divinylcyclohexane, 1,3-divinylcyclohexane, 1,3-divinylcyclopentane, 1,5-divinylcyclooctane, 1-allyl-4-vinylcyclohexane, 1,4-diallylcyclohexane, 1-allyl-5-vinylcyclooctane, 1,5-diallylcyclooctane, 1-allyl-4-isopropenylcyclohexane, 1-isopropenyl-4-vinylcyclohexane, and 1-isopropenyl-3-vinylcyclopentane; and

aromatic polyene compounds such as divinylbenzene and vinylisopropenylbenzene.

They are used singly or in combination in the copolymerization with the α-olefin.

The polyene compounds, used in the invention are polyene compounds having 7 or more carbon atoms and having an olefinic double bond at the both terminals, and preferably used are aliphatic or alicyclic polyene compounds having an olefinic double bond at the both terminals.

Concrete examples of such preferable polyene compounds include 1,6-heptadiene, 1,7-octadiene, 1,9-decadiene, 1,13-tetradecadiene, 1,5,9-decatriene, 1,4-divinylcyclohexane, 1,3-divinylcyclopentane, 1,5-divinylcyclooctane, 1-allyl-4-vinylcyclohexane and 1,4-diallylcyclohexane.

Of these, preferred are aliphatic polyene compounds having 8 or more carbon atoms, preferably 10 or more carbon atoms, and particularly preferred are straight-chain aliphatic polyene compounds having 10 or more carbon atoms.

In the copolymerization of the above-mentioned α-olefin and polyene compound, combinations preferably used in the invention are:

ethylene/1,7-octadiene, ethylene/1,9-decadiene, ethylene/1,13-tetradecadiene, ethylene/1,5,9-decatriene, propylene/1,7-octadiene, propylene/1,9-decadiene, propylene/1,13-tetradecadiene, propylene/1,5,9-decatriene, butene/1,9-decadiene, butene/1,5,9-decatriene, 4-methyl-1-pentene/1,9-decadiene, 3-methyl-1-butene/1,9-decadiene, 1-eicosene/1,9-decadiene, propylene/1,4-divinylcyclohexane, and butene/1,4-divinylcyclohexane.

When the α-olefin and the polyene compound are precopolymerized to the aforementioned transition metal compound catalyst component [A-3] and the organometallic compound catalyst component [B-2] in the invention, the polyene compound is used generally in an amount of 0.0001 to 10 mol, preferably 0.0005 to 5 mol, especially preferably 0.001 to 2 mol per 1 mol of the α-olefin.

In the invention, the prepolymerization can be carried out in the presence of an inert solvent which will be described later. In the prepolymerization, the above-mentioned monomers and catalyst components are added to the inert solvent, and the prepolymerization is preferably conducted under relatively mild conditions. The prepolymerization may be carried out under such condition that the produced prepolymer would be either dissolved in the polymerization medium or not dissolved therein, but preferably carried out under such condition that the produced prepolymer is not dissolved in the polymerization medium.

In more concrete, the prepolymerized catalyst [I] can be prepared in the invention by the following processes.

i) A process comprising bringing the transition metal compound catalyst component [A] and the organometallic compound catalyst component [B] and if necessary the electron donor into contact with each other in an inert solvent to form a catalyst, and copolymerizing the α-olefin and the polyene compound to the obtained catalyst to form a prepolymerized catalyst.

ii) A process comprising bringing the transition metal compound catalyst component [A-3] and the organometallic compound catalyst component [B-2] and if necessary the electron donor into contact with each other in a mixture of the α-olefin and the polyene compound to form a catalyst, and copolymerizing the α-olefin and the polyene compound to the obtained catalyst to form a prepolymerized catalyst.

Concrete examples of the above-mentioned inert solvents include:

aliphatic hydrocarbons such as propane, butane, pentane, hexane, heptane, octane, decane, dodecane and kerosine;
alicyclic hydrocarbons such as cyclopentane, cyclohexane and methylcyclopentane;
aromatic hydrocarbons such as benzene, toluene and xylene;
halogenated hydrocarbons such as α-olefin chloride and chlorobenzene; and
mixtures of these hydrocarbons.

Of these, preferably used are aliphatic hydrocarbons.

The prepolymerization can be carried out by any process of a batch process, a semi-continuous process and a continuous process.

In the prepolymerization, a catalyst having a higher concentration than that of a catalyst used in the polymerization can be employed.

The concentrations of the catalyst components in the prepolymerization vary depending on the catalyst components used. The transition metal compound catalyst component is used in an amount (per 1 liter of the polymerization volume) of generally 0.001 to 5,000 mmol, preferably 0.01 to 1,000 mmol, more preferably 0.1 to 500 mmol, in terms of the transition metal atom.

The organometallic compound catalyst component is used in such an amount that a precopolymer would be produced in an amount of 0.01 to 2,000 g, preferably 0.03 to 1,000 g, more preferably 0.05 to 200 g, per 1 g of the transition metal compound catalyst component, that is, the organometallic compound catalyst component is used in an amount of generally 0.1 to 1,000 mol, preferably 0.5 to 500 mol, more preferably 1 to 100 mol, per 1 mol of the transition metal atom contained in the transition metal compound catalyst component.

In the case of using an electron donor in the prepolymerization, the amount of the electron donor is in the range of 0.01 to 50 mol, preferably 0.05 to 30 mol, more preferably 0.1 to 10 mol, per 1 mol of the transition metal atom contained in the transition metal compound catalyst component.

The reaction temperature in the prepolymerization is desired to be in the range of usually -20 to +100 °C, preferably -20 to +80 °C, more preferably -10 to +40 °C.

A molecular weight regulator such as hydrogen can be used in the prepolymerization.

The prepolymerized catalyst [I] of the present invention is obtainable by copolymerizing the above-mentioned α-olefin and polyene compound to the transition metal compound catalyst component [A-3] and the organometallic compound catalyst component [B-2], in the total amounts of the α-olefin and the polyene compound of 0.01 to 2,000 g, preferably 0.03 to 1,000 g, more preferably 0.05 to 200 g, per 1 g of the transition metal compound catalyst component.

The prepolymerized catalyst [I] obtained as above contains an α-olefin/polyene copolymer, and the α-olefin/polyene copolymer contains constituent units derived from the α-olefin in an amount of 99.999 to 70 % by mol, preferably 99.995 to 75 % by mol, more preferably 99.99 to 80 by mol, most preferably 99.95 to 85 % by mol, and contains constituent units derived from the polyene compound in an amount of 0.001 to 30 % by mol, preferably 0.005 to 25 % by mol, more preferably 0.01 to 20 % by mol, most preferably 0.05 to 15 % by mol.

The composition ratio in the above-mentioned α-olefin/polyene copolymer can be determined by measuring the amounts of the α-olefin and the polyene compound consumed in the prepolymerization reaction. Concretely, the constituent units [P] (% by mol) can be calculated as follows.

$$[P]\ (\%\ \text{by mol}) = \frac{([P_0] - [P_r]) \times 100}{([P_0] - [P_r]) + ([\alpha_0] - [\alpha_r])}$$

In the above formula, each symbols have the following meanings.

$[P_0]$: number of moles of the polyene compound fed in the prepolymerization
$[P_r]$: number of moles of the unreacted polyene compound
$[\alpha_0]$ : number of moles of the α-olefin fed in the prepolymerization
$[\alpha_r]$: number of the unreacted α-olefin

$[\alpha_r]$ and $[P_r]$ in the above formula can be determined by measuring the unreacted α-olefin and the unreacted polyene compound both remaining in the polymerizer by means of gas chromatography.

The prepolymerized catalyst obtained as above is generally in the form of a suspension.

The prepolymerized catalyst in the form of a suspension can be per se used in the subsequent polymerization, or a prepolymerized catalyst obtained by separating from the suspension can be also used in the subsequent polymerization.

When the prepolymerized catalyst in the form of a suspension per se is used in the subsequent polymerization, the prepolymerized catalyst may be used singly without combining the organometallic catalyst component [II] and the electron donor [III].

In the invention, prior to the prepolymerization, olefin may be beforehand prepolymerized to the transition metal compound catalyst component [A-3] and the organometallic compound catalyst component [B-2].

As the olefin, α-olefin (preferably polypropylene) is employed.

If the olefin is beforehand prepolymerized to the catalyst components [A-3] and [B-2], there can be obtained for example the following effect. That is, when the olefin is beforehand prepolymerized to the catalyst components [A-3] and [B-2], a prepolymerized catalyst excellent in particle properties such as particle diameter distribution and particle size distribution can be obtained.

When the olefin is polymerized or copolymerized using such prepolymerized catalyst [I] as mentioned above, an olefin polymer having a high melt tension can be obtained.

The catalyst for olefin polymerization according to the invention is described below.

The catalyst for olefin polymerization according to the invention is formed from [I] the prepolymerized catalyst obtained as above and [II] an organo aluminum oxy-compound as organometallic compound catalyst component. The catalyst for olefin polymerization may be formed from [I] the prepolymerized catalyst, [II] the organometallic compound catalyst component, and [III] an electron donor.

As the organometallic compound catalyst component [II] used herein, those similar to the aforementioned organometallic compound catalyst component [B] are employed.

As the electron donor [III] used herein, those similar to the aforementioned electron donor (a) or electron donor (b) are employed. These electron donors (a) and (b) may be used in combination.

The catalyst for olefin polymerization according to the invention may contain other components which are useful for olefin polymerization, in addition to the above-mentioned components.

In the polymerization process of olefin according to the invention, olefin is polymerized or copolymerized in the presence of such catalyst for olefin polymerization as mentioned above.

Examples of the olefins used herein are the aforementioned α-olefins of 2 to 20 carbon atoms.

Also employable are:

aromatic vinyl compounds such as styrene, substituted styrenes (e.g., dimethyl styrene), allylbenzene, substituted allylbenzenes (e.g., allyltoluene), vinylnaphthalene, substituted vinylnaphthalenes, allylnaphthalene and substituted allylnaphthalenes;
alicyclic vinyl compounds such as vinylcyclohexane, substituted vinylcyclohexane, vinylcyclopentane, substituted vinylcyclopentane, vinylcycloheptane, substituted vinylcycloheptane and allylnorbornane;
cyclic olefins such as cyclopentene, cycloheptene, norbornene, 5-methyl-2-norbornene, tetracyclododecene and 2-methyl-1,4,5,8-dimethano-1,2,3,4,4a,5,8,8a-octahydronaphthalene;
silane type unsaturated compounds such as allyltrimethylsilane, allyltriethylsilane, 4-trimethylsilyl-1-butene, 6-trimethylsilyl-1-hexene, 8-trimethylsilyl-1-octene and 10-trimethylsilyl-1-decene; and
the aforementioned polyene compounds.

They can be employed singly or in combination.

Of these, preferably used are ethylene, propylene, 1-butene, 3-methyl-1-butene, 3-methyl-1-pentene, 4-methyl-1-pentene, vinylcyclohexane, dimethyl styrene, allyltrimethylsilane and allylnaphthalene.

In the invention, the polymerization can be carried out by either a process for liquid phase polymerization such as solution polymerization and suspension polymerization, or a process for gas phase polymerization.

When the polymerization reaction is carried out in a form of a slurry polymerization, the aforementioned inert organic solvents may be used as the reaction solvent, or olefins which are liquid at the reaction temperature may be used as the reaction solvent.

In the polymerization process according to the invention, the prepolymerized catalyst [I] is used in an amount (per 1 liter of the polymerization volume) of usually 0.001 to 100 mmol, preferably 0.005 to 20 mmol, in terms of the transition metal atom in the prepolymerized catalyst [I]. The organometallic compound catalyst component [II] is used in such an amount that the metal atoms contained in the catalyst component [II] would be usually 1 to 2,000 mol, preferably 2 to 500 mol, per 1 mol of the transition metal atom contained in the prepolymerized catalyst [I] in the polymerization system.

When the electron donor [III] is used, the amount of the electron donor [III] is generally in the range of 0.001 to 10 mol, preferably 0.01 to 5 mol, per 1 mol of the metal atom of the organometallic compound catalyst component [II].

If hydrogen is used in the polymerization, the molecular weight of the resulting polymer can be regulated, and the obtained polymer has a high melt flow rate.

The conditions for the polymerization process of the invention depend on the olefins used, but generally the polymerization process is carried out under the following conditions.

The polymerization temperature is generally in the range of 20 to 300 °C, preferably 50 to 150 °c, and the polymerization pressure is generally in the range of a normal pressure to 10 MPa (100 kg/cm$^2$), preferably 0.2 to 5 MPa (50 kg/cm$^2$).

In the process of the invention, the polymerization can be carried out either batchwise, semi-continuously or continuously. Further, the polymerization may be also carried out in two or more steps having reaction conditions different from each other.

A homopolymer of olefin may be prepared by the polymerization of the invention. Otherwise, a random copolymer or a block copolymer may be also prepared from two or more kinds of olefins by the polymerization of the invention.

When the polymerization process of olefin is practiced using the catalyst for olefin polymerization as described above, an olefin polymer having a high melt tension can be obtained with high polymerization activity.

The olefin polymer obtainable in the present invention is an α-olefin/polyene copolymer-containing olefin polymer comprising:

(i) an α-olefin/polyene copolymer, and
(ii) an olefin polymer.

In more detail, the olefin polymer obtainable in the invention is an olefin polymer being obtained by polymerizing or copolymerizing olefin in the presence of a prepolymerized catalyst [I] for olefin polymerization as mentioned above.

The olefin polymer containing an α-olefin/polyene copolymer obtainable in the invention contains the α-olefin/polyene copolymer (i) in an amount of 0.001 to 99 % by weight, preferably 0.005 to 90 % by weight, more preferably 0.01 to 88 % by weight, and contains the olefin polymer (ii) in an amount of 99.999 to 1 % by weight, preferably 99.995 to 10 % by weight, more preferably 99.99 to 12 % by weight.

Among such olefin polymers obtainable in the invention, particularly preferred is an olefin polymer containing the α-olefin/polyene copolymer (i) in an amount of 0.001 to 15 % by weight, especially 0.008 to 10 % by weight and the olefin polymer (ii) in an amount of 99.999 to 85 % by weight, especially 99.992 to 90 % by weight.

The melt flow rate (MFR) of the olefin polymer obtainable in the invention, as measured in accordance with ASTM D1238, is not more than 5000 g/10min, preferably in the range of 0.01 to 3000 g/10min, more preferably 0.02 to 2000 g/10min, most preferably 0.05 to 1000 g/10min.

Accordingly, the olefin polymer obtainable in the invention has a high melt tension (MT).

In the olefin polymer obtainable in the invention, the melt tension (MT) and the melt flow rate (MFR) satisfy the following relation.

For example, if the α-olefin/polyene copolymer (i) and the olefin polymer (ii) both constituting the olefin polymer obtainable in the invention are an ethylene/polyene copolymer and polypropylene, respectively, the melt tension and the melt flow rate in this olefin polymer satisfy the following relation:

generally, $\log[MT] \geq -0.8 \log[MFR] + 0.3$;
preferably, $\log[MT] \geq -0.8 \log[MFR] + 0.5$;
more preferably, $\log[MT] \geq -0.8 \log[MFR] + 0.7$;
most preferably, $\log[MT] \geq -0.8 \log[MFR] + 0.8$.

If the α-olefin/polyene copolymer (i) is a copolymer of α-olefin of 3 or more carbon atoms and polyene and the olefin polymer (ii) is polypropylene in the olefin polymer obtainable in the invention, the melt tension and the melt flow rate in this olefin polymer satisfy the following relation:

generally, $\log[MT] \geq -0.8 \log[MFR] + 0.30$;
preferably, $\log[MT] \geq -0.8 \log[MFR] + 0.35$;
more preferably, $\log[MT] \geq -0.8 \log[MFR] + 0.40$.

Furthermore, when the olefin polymer obtainable in the invention is composed of an ethylene/polyene copolymer (i) and polyethylene (ii) as described above and has a density of about 0.92 g/cm$^3$ and MFR of 1 g/10 min, the melt tension of this olefin polymer is not less than 2.5 g, preferably not less than 3.5 g, more preferably not less than 4.0 g, much more preferably not less than 4.5 g, most preferably not less than 5.0 g.

An intrinsic viscosity [η] of the olefin polymer obtainable in the invention, as measured in decalin at 135°C, is in the range of 0.05 to 20 dl/g, preferably 0.1 to 15 dl/g, more preferably 0.2 to 13 dl/g.

in the olefin polymer obtainable in the invention, the melt tension (MT) and an intrinsic viscosity [η] also satisfy the following relation,

For example, if the α-olefin/polyene copolymer (i) and the olefin polymer (ii) both constituting the olefin polymer obtainable in the invention are an ethylene/polyene copolymer and polypropylene, respectively, the melt tension and the intrinsic viscosity [η] in this olefin polymer satisfy the following relation:

generally, $\log[MT] \geq 3.7 \log[(\eta)] - 1.5$;
preferably, $\log[MT] \geq 3.7 \log[(\eta)] - 1.3$;
more preferably, $\log[MT] \geq 3.7 \log[(\eta)] - 1.1$;
most preferably, $\log[MT] \geq 3.7 \log[(\eta)] - 1.0$,

If the α-olefin/polyene copolymer (i) is a copolymer of α-olefin of 3 or more carbon atoms and polyene and the olefin polymer (ii) is polypropylene in the olefin polymer obtainable in the invention, the melt tension and the intrinsic viscosity in this olefin polymer satisfy the following relation:

generally, $\log[MT] \geq 3.7 \log[(\eta)] -1.50$;
preferably, $\log[MT] \geq 3.7 \log[(\eta)] - 1.45$;
more preferably, $\log[MT] \geq 3.7 \log[(\eta)] - 1.40$.

Furthermore, when the olefin polymer obtainable in the invention is composed of an ethylene/polyene copolymer (i) and polyethylene (ii) as described above and has a density of about 0.92 g/cm$^3$ and the intrinsic viscosity [η] of 1.8 dl/g, the melt tension of this olefin polymer is not less than 2.5 g, preferably not less than 3.5 g, more preferably not less than 4.0 g, much more preferably not less than 4.5 g, most preferably not less than 5.0 g.

The melt tension can be determined in the following manner.

Using a MT measuring machine (produced by Toyo Seiki Seisakusho K.K.), 7 g of a polymer is introduced into a cylinder having an orifice on the bottom and a piston, the cylinder being kept at a melting temperature of the polymer (α-polyolefin: 190 °C, polypropylene: 230 °C). After 5 minutes, the piston is pushed down at a rate of 10 mm/min to extrude a molten polymer in the form of strand from the cylinder through the orifice provided on the bottom of the cylinder. The extruded strand is drawn in the form of filament, and wound up at a rate of 2.5 m/min by way of a pulley of a load detector. In this stage, a stress applied to the pulley is measured. The obtained value is a melt tension of the polymer.

The melt tension of the olefin polymer obtainable in the invention is higher than that of olefin polymers prepared by the conventional processes. Further, the olefin polymer obtainable in the invention is excellent in rigidity, transparency, mechanical strength (e.g., impact strength) and appearance. Accordingly, when the olefin polymer obtainable in the invention is used, there can be obtained films not only showing good appearance, for example, being free from fish eye, but also having high transparency and high strength.

The olefin polymer as mentioned above is also excellent in molding properties such as inflation molding properties, and can be molded into films at a high speed with a high yield. In addition, various molding processes such as blow molding and vacuum molding can be applied to the olefin polymer, and thereby uses of the olefin polymer can be extended.

Among the olefin polymers obtainable in the present invention, an olefin polymer containing the α-olefin/polyene copolymer in a large amount can be favorably employed as a master batch. In the case of using the olefin polymer obtainable in the invention as a master batch, this olefin polymer is desired to contain the α-olefin/polyene copolymer (i) in an amount of 15 to 99 % by weight, preferably 18 to 90 % by weight, more preferably 20 to 80 % by weight, and the olefin polymer (ii) in an amount of 85 to 1 % by weight, preferably 82 to 10 % by weight, more preferably 80 to 20 % by weight.

The olefin polymer obtainable in the invention may further contain various additives such as a heat stabilizer, a weathering stabilizer, an antistatic agent, an antiblocking agent, a lubricant, a nucleating agent, a pigment, a dye, an inorganic filler and an organic filler, in the case of necessity.

## EFFECT OF THE INVENTION

The prepolymerized catalyst according to the invention is a prepolymerized catalyst obtained by copolymerizing an α-olefin and a polyene compound to [A] a transition metal compound catalyst component and [B] an organometallic compound catalyst component in the total amounts of the α-olefin and the polyene compound of 0.01 to 2,000 g per 1 g of the transition metal compound catalyst component [A]. When olefins is polymerized or copolymerized in the presence of the above prepolymerized catalyst, an olefin polymer having a high melt tension can be obtained.

The olefin polymer obtained as above can be molded into inflation films of good appearance, high transparency, high strength, etc. at a high speed with a high yield and a high moldability, because the olefin polymer has a high melt tension. Further, the olefin polymer can be molded by various molding processes such as blow molding, vacuum molding, air-pressure molding, calender molding, foam molding, extrude molding and stretch molding and hence uses of the olefin polymer can be extended.

## Claims

1. A prepolymerized catalyst obtainable by prepolymerizing an α-olefin and a polyene compound having 7 or more carbon atoms which has an olefinic double bond at both terminals to

    [A-3] a transition metal metallocene compound catalyst component containing a ligand having a cyclopentadienyl skeleton, and
    [B-2] an organoaluminum oxy-compound catalyst component,

    in the total amounts of the α-olefin and the polyene compound of 0.01 to 2,000 g per 1 g of the metallocene compound [A-3], and
    constituent units derived from the α-olefin being in an amount of 99.999 to 70 % by mol, and constituent units derived from the polyene compound being in an amount of 0.001 to 30 by mol.

2. A catalyst for olefin polymerization comprising:

    [I] a prepolymerized catalyst as defined in Claim 1; and
    [II] an organoaluminum oxy-compound catalyst component.

3. An olefin polymerization process comprising polymerizing or copolymerizing olefin in the presence of a catalyst for olefin polymerization as defined in Claim 2.

## Patentansprüche

1. Vorpolymerisierter Katalysator, erhältlich durch Vorpolymerisation eines α-Olefins und einer Polyen-Verbindung mit 7 oder mehr Kohlenstoffatomen, die eine olefinische Doppelbindung an beiden Enden aufweist, an

    [A-3] eine Übergangsmetall-Metallocenverbindungs-Katalysatorkomponente, die einen Liganden mit einem Cyclopentadienylgerüst enthält, und

    [B-2] eine Organoaluminium-Oxyverbindungs-Katalysatorkomponente,

    in den Gesamtmengen von α-Olefin und Polyen-Verbindung von 0,01 bis 2 000 g je 1 g der Metallocen-Verbindung [A-3],

    wobei die aus dem α-Olefin stammenden konstituierenden Einheiten in einer Menge von 99,999 bis 70 Mol-% und die aus der Polyen-Verbindung stammenden konstituierenden Einheiten in einer Menge von 0,001 bis 30 Mol-% sind.

2. Katalysator zur Olefin-Polymerisation, umfassend:

    [I] einen vorpolymerisierten Katalysator wie in Anspruch 1 definiert; und

    [II] eine Organoaluminium-Oxyverbindungs-Katalysatorkomponente.

3. Ein Olefin-Polymerisationsverfahren, umfassend die Polymerisation oder Copolymerisation von Olefin in Gegenwart eines Katalysators zur Olefin-Polymerisation wie in Anspruch 2 definiert.

## Revendications

1. Catalyseur prépolymérisé pouvant être obtenu par une prépolymérisation d'une α-oléfine et d'un composé polyène comportant 7 atomes de carbone ou davantage qui présente une double liaison oléfinique au niveau des deux

terminaisons avec

[A-3] qui est un composant de catalyseur d'un composé métallocène d'un métal de transition contenant un coordinat présentant un squelette cyclopentadiényle, et
[B-2] qui est un composant de catalyseur d'un composé oxygéné organoaluminium,

pour donner des quantités totales de l'a-oléfine et du composé polyène allant de 0,01 à 2 000 g pour 1 gramme du composé métallocène [A-3], et
les unités constitutives provenant de l'α-oléfine étant dans une proportion de 99,999 à 70 % molaire, et les unités constitutives provenant du composé polyène étant dans une proportion de 0,001 à 30 % molaire.

**2.** Catalyseur pour la polymérisation d'oléfines comprenant ;

[I] un catalyseur prépolymérisé comme défini dans la revendication 1, et
[II] un composant de catalyseur d'un composé oxygéné organoaluminium.

**3.** Procédé de polymérisation d'une oléfine comprenant la polymérisation ou la copolymérisation d'une oléfine en présence d'un catalyseur pour la polymérisation d'oléfines comme défini dans la revendication 2.